# EUROPEAN PATENT APPLICATION

(11) **EP 0 631 927 A1**
(43) Date of publication of application: **04.01.1995**
(21) Application number: 93305188.0
(22) Date of filing: 01.07.1993
(51) Int. Cl.: B62D 61/06, B60G 3/01

(54) **Three wheeled vehicle having steerable wheel suspension**

(71) Applicant: Richards, Donald C., Westmoreland, New Hampshire, 03467 (US)
(72) Inventor: Richards, Donald C., Westmoreland, New Hampshire, 03467 (US)
(74) Representative: King, James Bertram

(57) **Abstract**

A three wheeled vehicle has two wheels (16) in front with front wheel drive, and a single rear wheel (28) and rear wheel steering. A steering linkage (30,38,40,76,78,58) causes the vehicle to steer with directionally conventional response to a steering wheel input (26). A rear axle assembly (112) (see Figure 3A) provides uncomplicated construction accommodating both the steering link (58) and a spring (96) and shock absorber (118) type suspension. The axle (112) moves vertically within inner tube (92) and is constrained against rotation by rods (114,104). The inner tube (92) is coupled to steering arm (58) and rotates within outer tube (60).

## Description

This invention relates to a three wheeled vehicle, and more particularly to a three wheeled powered vehicle having two axles with steering mechanism controlling either axle while a suspension member is incorporated with at least one steering component.

Three wheeled vehicles having one rear and two front wheels are known. U.S. 4,020,914, issued to Wolfgang Trautwein on 3rd May, 1977; 4,448,278 issued to William J. Badsey on 15th May 1984; 4787470 issued to William J. Badsey on 29th November, 1988, are representative, each disclosing three wheeled vehicles steered from the front wheels and driven from the rear wheel. U.S. 4,703,824 issued to Shoichiro Irimajiri et al on 3rd November, 1987, discloses a three wheeled vehicle both steered and driven from the front.

Many advantages accrue from the concept of the three wheeled vehicle. However, cost of manufacture and repair and expense of operation are of paramount importance in personal transport vehicles. This is especially true of second vehicles, for which the decision of an owner on whether to buy may rest almost exclusively on purchase price and maintenance costs.

While each of the above inventions addresses a specific need or engineering concept, this is done from an engineering perspective, and simplicity of the device and other economies arising from the design may be neglected. Therefore a need exists for an uncomplicated and economical three wheeled vehicle as provided for by this invention. None of the above disclosures, taken either singly or in combination, is seen to describe the instant invention as claimed.

According to this invention there is provided a three-wheeled vehicle comprising a pair of spaced front wheels mounted on a driven axle assembly, and a single rear wheel, characterised in that the rear wheel is carried by an axle assembly attached to including spring means and shock absorbing means disposed within inner and outer concentric members, the inner and outer concentric members being mechanically linked one to another whereby the members rotate together while permitting said inner concentric member to be axially displaced while said outer concentric member is axially fixed with steering means being affixed to one concentric member.

According to this invention there is further provided a three wheeled vehicle including first and second axles mounted thereon, at opposite ends thereof, two wheels mounted on the one axle and one wheel mounted upon the other axle, power means and a seat disposed within said vehicle, transmission means operably connecting said power means to at least one wheel to drive same, suspension means mounted on the vehicle and connecting the wheels thereto, steering means mounted on the vehicle and controlling the steering of at least one wheel, characterised by:-
the steering means being attached to suspension means attached to a wheel with the suspension means including spring means and shock absorbing means disposed within inner and outer concentric members, the inner and outer concentric members being mechanically linked one to another whereby the members rotate together while permitting said inner concentric member to be axially displaced while said outer concentric member is axially fixed with steering means being affixed to one concentric member, and further characterised by:
the one axle being provided with both suspension means and a steered wheel which may be vertically displaced relative to the vehicle while maintaining a portion of the weight of the vehicle supported on the wheel and allowing unimpeded steering thereof upon displacement of the steering means affixed to the concentric member such that said concentric members are arcuately displaced.

The three wheeled vehicle of this invention provides front wheel drive and rear wheel steering as well as a steering linkage and a rear strut and axle assembly, not known from the prior art, to simplify the vehicle construction thereby reducing the cost of production and improving the ease of repair and maintenance.

A front compartment, ahead of the driver and between the front wheels, houses a clutch, transmission and differential. An engine may be located under the driver's seat, motorcycle style, or in the front compartment. Independent front suspension is provided and all wheels are braked.

In a first preferred embodiment, the three wheeled vehicle has a general appearance of a typically open motorcycle due to its partial body comprising a front faring spanning both front wheels and extending to a windshield. A partial body having full width in the front provides a major safety advantage in that visibility of the vehicle to other drivers is greatly improved over a typical motorcycle having little frontal area. The vehicle is superior to a traditional two wheeled motorcycle due to added stability and skidding resistance provided by having three wheels.

A second preferred embodiment provides the general appearance of a typical fully enclosed four wheeled vehicle. The full body covers front and rear wheels and defines a passenger compartment.

The advantage of separating the steering and driving functions between the two axles lies in the resultant simplicity of the components. Superior control resulting from front traction and satisfactory handling characteristics due to conventional independent suspension are retained. Steering from a single rear wheel eliminates parallelogram linkage, and further allows extremely sharp turns. This makes the vehicle very practical in an urban setting. The novel strut and axle assembly eliminates the usual fork straddling the rear tyre. Component cost of and access to the tyre for maintenance and repair are improved.

Accordingly, one of the objects of this invention is to provide a three wheeled vehicle having steering and driving functions separated between the two axles.

A second and preferred object is to provide a three wheeled vehicle having rear wheel steering.

Another preferred object is to provide a rear strut and axle assembly which permits suspension rebound while maintaining an attitude determined by a steering input.

An additional preferred object is to provide a three wheeled vehicle having bodywork spanning both wheels of a front axle, so as to provide maximum frontal visibility.

These and other preferred objects of this invention will become readily apparent from the further disclosure and the drawings showing embodiments as examples, wherein:
- Figure 1: is a partial perspective view of the vehicle,
- Figure 2: is a perspective detail view of the invention as shown in Figure 1,
- Figure 3A: is a partial sectional detail view of the rear strut and axle assembly of Figure 1, drawn to an enlarged scale.
- Figure 3B: is a fragmentary perspective detail view taken from the lower left centre of Figure 3A and drawn to enlarged scale,
- Figure 4A: is a perspective view of a first embodiment of the invention and emphasising the bodywork,
- Figure 4B: is a perspective view of a second embodiment emphasising the bodywork.
- Figure 5: is a top plan view of the invention illustrating a second embodiment, the vehicle body being shown in broken lines.
- Figure 6: is a top plan view of the invention illustrating a first embodiment, the vehicle body being shown in broken lines,
- Figures 7, 8 and 9: are respectively top plan, side elevational and front elevational views of the second embodiment.

Similar reference characters denote corresponding features consistently throughout the attached drawings.

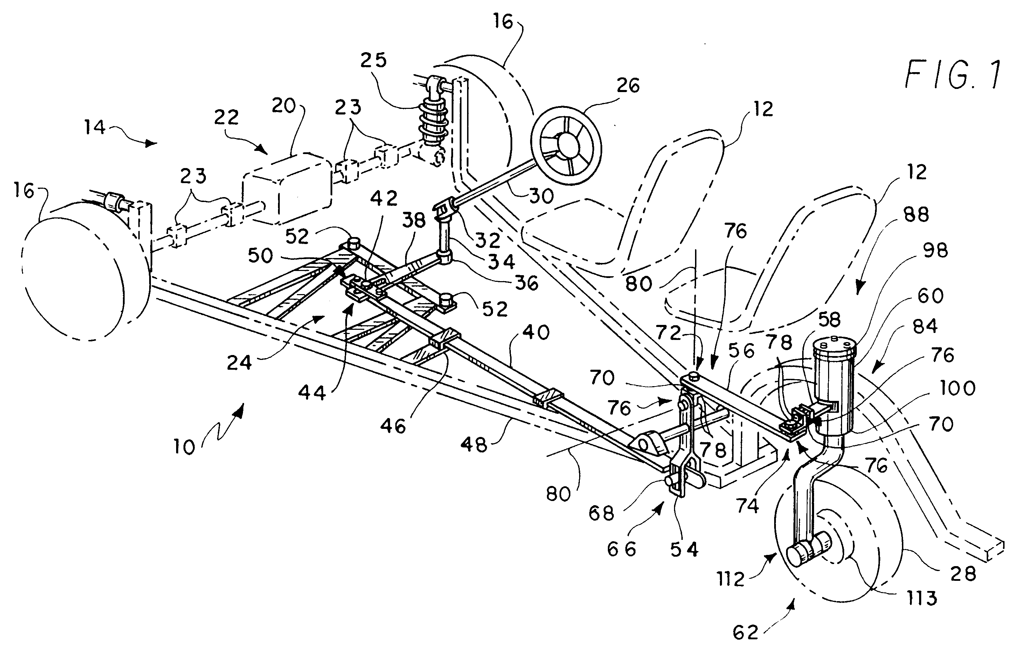

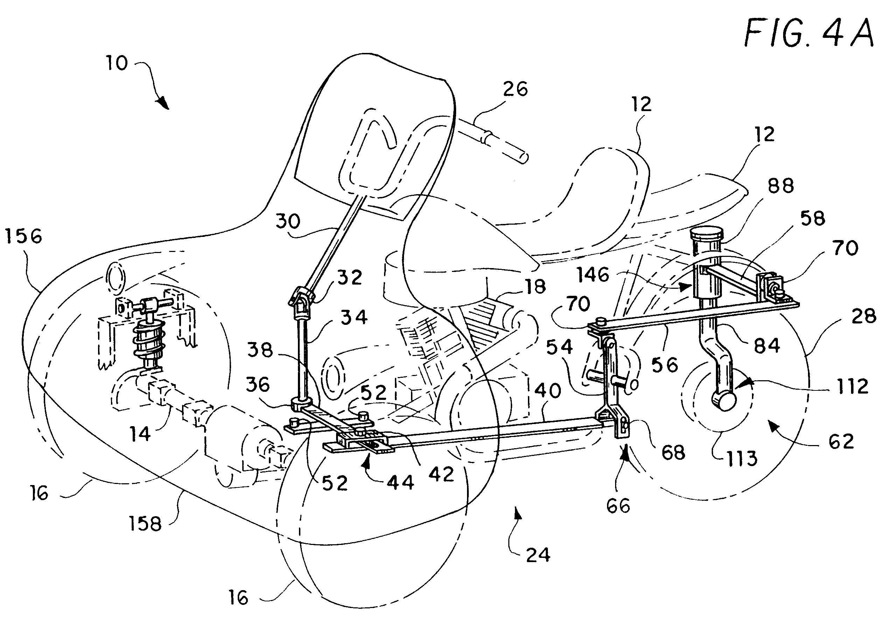

The present invention as seen in Figure 1 comprises a three wheeled vehicle 10 having two seats 12 arranged in tandem. The front axle 14 has two wheels 16 disposed thereon, these two wheels 16 being driven in conventional fashion by an engine 18 (Figure 4A) through a transmission 20 and a differential gear assembly 22. The vehicle 10 preferably has independent suspension, including universal joints 23 and front suspension springs 25.

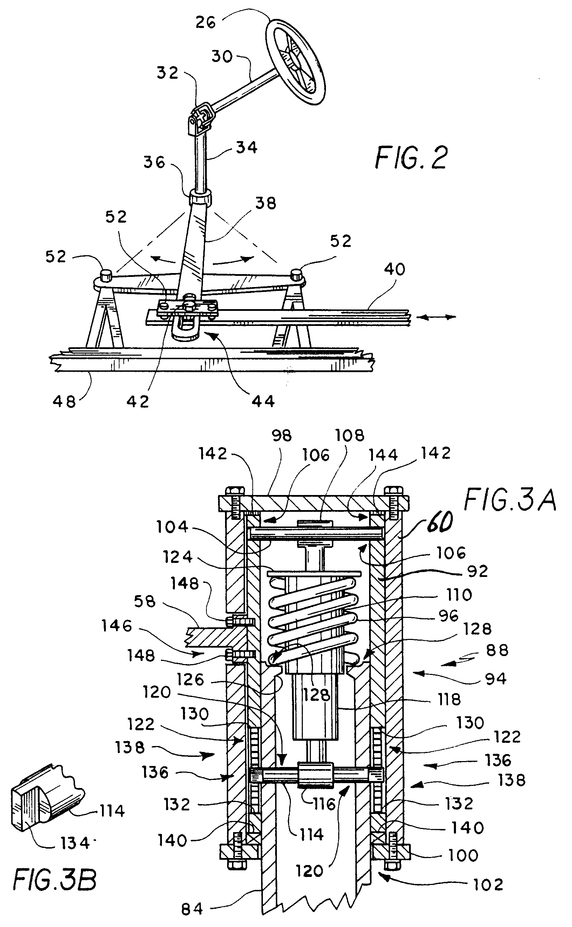

As shown in Figures 1 and 2, a steering linkage 24 provides translation of motion from a steering wheel or handle bar 26 to the rear wheel 28 which causes directional response of the vehicle 10 to follow conventional practice; that is, a clockwise turn of the steering wheel or handle bar 26 (as seen by the driver) steers the vehicle 10 to the right. It is to be understood that major components of the vehicle 10 such as steering linkage 24, engine 18, transmission 20 and similar items are to be secured to the vehicle 10 in any suitable manner well known to those skilled in the art, and thus further details are omitted.

The steering wheel or handle bar 26 rotates a steering shaft 30 which includes a universal joint 32. A vertical extension 34 of the steering shaft 30 terminates at a flange 36 supporting a radius arm 38.

As best seen in Figure 2, the radius arm 38, which turns in step with the steering wheel or handle bar 26, moves a longitudinal member 40 in linear fashion. A pin or bolt 42 fastened to the longitudinal member 40 rides in a slot 44 disposed in the radius arm 38. The longitudinal member 40 is constrained by suitable brackets 46 attached to the vehicle frame 48 to move linearly fore and aft with respect to the vehicle 10. The pin or bolt 42 also secures a retainer 50 which holds the radius arm 38 in operative relation to the longitudinal member 40. Stops 52 disposed on the vehicle frame 48 limit angular travel of the radius arm 28.

Experience with single wheel steering shows that 85 degrees of arc of steering rotation provides the ability to achieve very sharp turns. This a great advantage to a vehicle in urban use, wherein parking and general manoeuvring may be available only to vehicles having extreme manoeuvring capabilities. Also, since the rear of such a vehicle will ordinarily be lighter than the front, the present arrangement reduces steering effort by the driver.

The longitudinal member 40 connects to a pivoting member 54, which in turn moves a short longitudinal member 56 fore and aft. The short longitudinal member 56 moves a rear radius arm 58 attached to a cylindrical housing 92 in housing 60 of the rear axle assembly 62. The pivoting member 54 has an elongate slot 66 surrounding a pin 68 connected to the longitudinal member 40. This arrangement permits operative interengagement of the longitudinal member 40, which moves linearly with the pivoting member 54. Similarly accommodation of motion as the short longitudinal member 56 moves in all three planes while transferring steering inputs to the rear radius arm 58 is provided by two universal joints 70 located at the forward and rear ends 72,74 of the short longitudinal member 56. These universal joints 70 comprise ball bearing assemblies 76 fastened to plates 78, the ball bearing assemblies 76 having rotating axes 80 normal to one another. Obviously, the geometry of both universal joints 70 is substantially identical, even though rotating axes 80 are shown for only one universal joint 70.

The cylindrical outer housing 60 is keyed to a vertically oriented segment 84 of the rear axle assembly 62 which rear axle assembly 62 supports and turns the rear wheel 28. This keyed relationship will be understood as the rear axle assembly 62 is explained.

The vertically oriented segment 84 of the rear axle assembly 62 rides concentrically within a tower assembly 88 comprising a cylindrical outer housing 60 firmly secured to the vehicle 10, an inner rotating cylinder 92, a shock absorber 94 and rear suspension spring 96. The inner rotating cylinder 92 is constrained to rotate upon receiving steering inputs from the rear radius arm 58 and does not move axially. Axial displacement is prevented by upper and lower caps 98,100 bolted to the outer cylindrical housing 60. The lower cap 100 has an orifice 102 defined therein allowing passage therethrough of the axle upper segment 84.

A top pin 104 penetrating diametrically opposing bores 106 in the inner rotating cylinder 92 also penetrates a boss 108 attached to an upper stationary part 110 of a shock absorber 94. Because the top pin 104 is anchored within the inner rotating cylinder 92, the upper, stationary part of the shock absorber 94 does not experience vertical displacement.

A bottom pin 114 penetrates a lower boss 116 in the lower, vertically displaceable portion 118 of the shock absorber 94 and penetrates diametrically opposed bores 120 in the axle vertical segment 84. The bottom pin 114 extends beyond the axle vertical segment 84 into slots 122 formed in the inner rotating cylinder 92.

The rear suspension spring 96 is retained between an upper flange 124 secured to the shock absorber upper part 110 and a lower flange 126 formed at the top surface 128 of the axle vertical segment 84.

The bottom pin 114 keys the suspension strut 84 to rotate in step with the inner rotating cylinder 92. Because of the elongate nature of the slots 122, the axle vertical segment 84 may slide axially within the tower assembly 88 to a limited degree, which motion accommodates vertical displacement periodically encountered as the vehicle rear wheel 28 negotiates minor obstructions in a road such as stones or potholes. The upper and lower surfaces 130,132 of the slots 122 serve as stops limiting this motion. Therefore, within limits imposed by the elongate dimension of the slots 122, the rear axle assembly 62 may rise and fall as road conditions demand while being keyed to rotate with, and thereby accept, steering inputs from the inner rotating cylinder 92.

At its lower end 112, the rear axle assembly 62 connects to and supports the rear wheel 28. This is done in conventional fashion and includes a brake drum assembly 113, understood to include necessary wheel bearings (not shown).

The bottom pin 114 is machined to present a planar surface 134 facing the sides 136 of the slots 122, as seen in Figure 3B. The slots 122 have needle bearing assemblies 138 to reduce wear due to frictional contact as the bottom pin 114 rises and descends therein.

Roller bearings 140 support the inner rotating cylinder 92 within the cylindrical outer housing 60. Washers 124 having low friction surfaces, such as provided by PTFE compounds, for example, are employed at the top 144 of the inner rotating cylinder.

An aperture 146 defined in the cylindrical outer housing 60 allows communication of the radius arm 58 with the inner rotating cylinder 92 to which the radius arm 58 is suitably fastened, as by bolts 148.

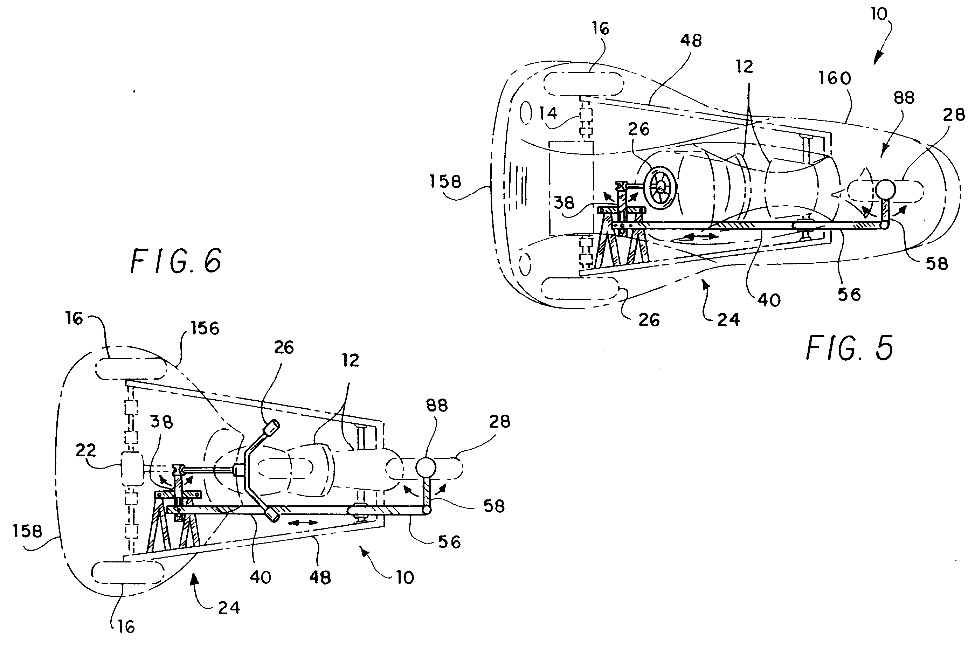

The present invention has two embodiments. In a first embodiment shown in Figures 4A and 6, bodywork 156 extends from the front 158 of the vehicle 10 to just behind the front wheels 16. In this embodiment, the vehicle 10 appears similar to a motorcycle, while retaining certain advantages presented herein arising from the novel arrangement of mechanical components.

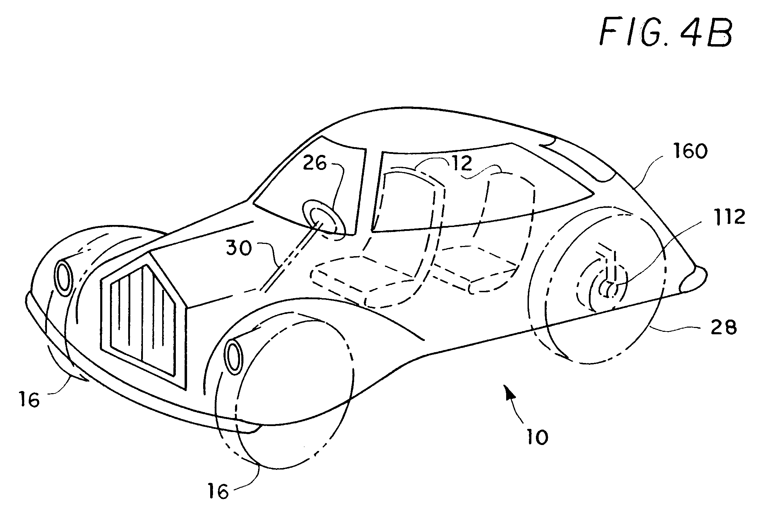

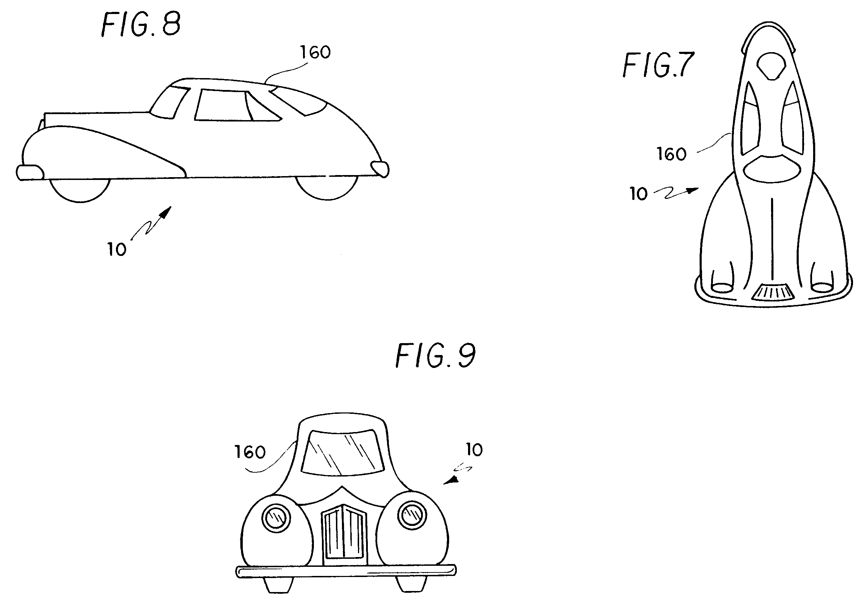

In a second embodiment, shown in Figures 4B, 5, 7, 8 and 9, bodywork 160 extends beyond the bodywork 156 of the first embodiment to envelope the entire vehicle 10. This embodiment essentially simulates a conventional fully enclosed automobile, while retaining the qualities of rear wheel steering, three wheels, and reduced weight and complexity, while retaining certain advantages of conventional vehicles.

It is to be understood that the present invention is not limited to the sole embodiments described above, but encompasses any and all embodiments within the scope of the following claims.

## Claims

1. A three-wheeled vehicle (10) comprises a pair of spaced front wheels (16) mounted on a driven axle assembly (14), and a single rear wheel (28), characterised in that the rear wheel (28) is carried by an axle assembly (112) attached to suspension means (88) including spring means (96) and shock absorbing means (118) disposed within inner and outer concentric members (84,92), the inner and outer concentric members (84,92) being mechanically linked one to another whereby the members rotate together while permitting said inner concentric member (84) to be axially displaced while said outer concentric member (92) is axially fixed with steering means (58) being affixed to one concentric member (92).

2. A three wheeled vehicle (10) including first (14) and second (62) axles mounted thereon at opposite ends thereof, two wheels (16) mounted on the one axle (14) and one wheel (28) mounted upon the other axle (62), power means (18) and a seat (12) disposed within said vehicle, transmission means (20) operably connecting said power means (18) to at least one wheel (16,28) to drive same, suspension means (25,88) mounted on the vehicle and connecting the wheels (16,28) thereto, steering means (26) mounted on the vehicle and controlling the steering of at least one wheel (16,28), characterised by:-
the steering means (26) being attached to suspension means (88) attached to a wheel (28) with the suspension means (88) including spring means (96) and shock absorbing means (118) disposed within inner and outer concentric members (84,92), the inner and outer concentric members (84,92) being mechanically linked one to another whereby the members rotate together while permitting said inner concentric member (84) to be axially displaced while said outer concentric member (92) is axially fixed with steering means (58) being affixed to one concentric member (92), and further characterised by:-
the one axle (62) being provided with both suspension means (88) and steered wheel (28) which may be vertically displaced relative to the vehicle while maintaining a portion of the weight of the vehicle supported on the wheel and allowing unimpeded steering thereof upon displacement of the steering means (58) affixed to the concentric member (92) such that said concentric members (84,92) are arcuately displaced.

3. A three wheeled vehicle (10) characterised by a front axle (14) and a rear axle (62), two front wheels (16) disposed on the front axle (14) and one rear wheel (28) disposed on the rear axle (62), the vehicle including at least one seat (12) mounted thereon, power means (18) mounted within the vehicle, transmission means (22) operably connected to the power means (18) and to the said front wheels (16), thereby driving the front wheels (16), suspension means (25,88) mounted on the vehicle and connecting the front wheels and the rear wheel respectively thereto, and steering means (26,58) mounted on the vehicle and connected to the rear wheel (28), the steering means controlling the rear wheel, wherein the two front wheels (16) are driven by the power means (18) through the transmission means (20), and the rear axle (112) having suspension means (88) including spring means (96) and shock absorbing means (118) disposed within inner (84) and outer (92) concentric members, the inner and outer concentric members (84,92) being mechanically linked one to another whereby the inner and outer concentric members rotate to the same degree while permitting the inner concentric member (84) to be axially displaced while the outer concentric member (92) is axially fixed, and whereby the rear wheel (28) may be vertically displaced relative to the vehicle while maintaining an attitude determined by a steering input and simultaneously maintaining a portion of the weight of the vehicle supported on said rear wheel (28).

4. A vehicle according to Claim 1 or 2 or 3, characterised by bodywork (160) covering, partially enclosing and spanning both the front wheels (16) and extending from a front of the vehicle to behind the front wheels.

5. A vehicle according to Claims 1, 2 or 3 or 4, characterised by bodywork (160) covering, partially enclosing and spanning both of the front wheels (16), and extending from a front of the vehicle to behind the rear wheel (28).

6. A vehicle according to Claim 1 or 2 or 3, characterised by bodywork (160) covering, partially enclosing and spanning at least both of the front wheels (16) and extending from a front of the vehicle to at least behind the front wheels (16).

7. A vehicle according to Claim 6, characterised by bodywork (160) covering, partially enclosing and spanning both front wheels (16) and extending from a front of the vehicle to behind the rear wheel (28).
